Europäisches Patentamt

European Patent Office

Office européen des brevets

(11) Publication number: **0 165 348**
**B1**

(12) EUROPEAN PATENT SPECIFICATION

(45) Date of publication of patent specification: 04.11.87

(51) Int. Cl.⁴: **A 47 J 37/04,** A 21 B 2/00, F 24 C 7/04

(21) Application number: 84304144.3

(22) Date of filing: 19.06.84

(54) Heating food articles.

(43) Date of publication of application:
27.12.85 Bulletin 85/52

(45) Publication of the grant of the patent:
04.11.87 Bulletin 87/45

(84) Designated Contracting States:
AT BE CH DE FR IT LI LU NL SE

(56) References cited:
EP-A-0 040 528
DE-A-1 927 512
FR-A-2 463 602

(73) Proprietor: UNITED BISCUITS (UK) LIMITED
12 Hope Street
Edinburgh Scotland (GB)

(72) Inventor: Masters, Adrian Guy
83 Hungerford Drive
Maidenhead Berkshire (GB)

(74) Representative: Jones, Ian et al
POLLAK MERCER & TENCH High Holborn House
52-54 High Holborn
London WC1V 6RY (GB)

Courier Press, Leamington Spa, England.

## Description

The invention relates to the heating of food articles.

Cooking apparatus for foodstuffs which exude fat is subject to that is known as "flaming", that is, ignition of the exuded fat, which occurs when the temperature of the exuded fat rises to a certain level. For example, during the cooking of hamburgers the exudate is liable to ignite at a temperature typically of the order of 370—380°C. Flaming can of course be prevented by the use of cooking temperatures below the flaming level, and it is advantageous to use near infrared heating sources because the surface temperature of the radiators need be no more than about 250°C. However, there are circumstances in which high temperature heat sources are employed, and when short cooking times are required, heat of considerable intensity has to be applied, even though infrared radiation sources are used, so that flaming occurs because of the temperature reached by parts of the cooking chamber on which fat has accumulated.

Published European Patent Application 0040528 describes an apparatus for heating food articles, the apparatus comprising a heating chamber for receiving a food article therein, means for supporting a food articles to be heated in the heating chamber and heating means for heating such an article. A small volume of air flow through the cooking chamber is advantageous and greatly reduces flaming. The same document also describes a method of heating a food article tending to exude fat, the method including the steps of placing the food article within a heating chamber and heating the article.

The present invention is concerned with the provision of a food heating method and apparatus whereby flaming is reduced or eliminated.

The invention accordingly provides an apparatus for heating food articles, the apparatus comprising a heating chamber for receiving a food article therein, means for supporting a food article to be heated in the heating chamber and heating means for heating such an article, characterised by impeller means for causing cooling air to flow beneath at least a portion of the floor of the chamber, which floor is positioned to receive fat exuded by the food article, and means responsive to the temperature of the floor for controlling the impeller means.

The invention also provides a method of heating a food article tending to exude fat, the method including the steps of placing the food article within a heating chamber and heating the article and being characterised by the steps of receiving fat exuded by the article on a floor of the heating chamber, sensing the temperature of the floor and applying a cooling air flow to the floor externally thereof in response to the sensed temperature.

Cooling of the floor in accordance with the invention reduces or eliminates the risk of flaming. The airflow can be guided between the floor and a lower floor of the apparatus or an underfloor on which the apparatus stands, but the apparatus conveniently includes a removable drip tray positioned beneath the supporting means, an upper surface of an upper plate of the drip tray forming the heating chamber floor, the tray having a lower plate spaced from the upper plate, and the impeller means causing the cooling air to flow between the upper and lower plates. The upper surface of the heating chamber floor is preferably inclined or shaped so that the fats, hot enough to be liquid, flow into a collecting region or sump, not necessarily incorporated in the floor, to facilitate removal.

The double walled structure of the tray avoids the need to establish a seal around the entire periphery of the floor when it is replaced after any removal, the double walled structure needing merely to be reconnected to the cooling air supply.

The cooling air flow can be induced by any suitable impeller means and can be directed also to the cooling of other parts of the apparatus which are liable to reach excessive temperatures at which "flaming" could occur. For example, if the apparatus includes a conveyor on which food items are carried beneath or between radiant heaters, cooling air can be applied to the conveyor at a position immediately downstream of that at which the cooked food items are discharged or to the guide surfaces by which the conveyor is guided between its upper and lower runs. If the apparatus incorporates heating elements such as infra-red heating tubes, the ends of which require to be cooled by an air flow when the tubes are in operation, the source of the air flow can be employed to provide cooling air also for such other parts of the apparatus.

If the impeller means is driven by an electric motor, the motor is preferably located remotely from the floor to minimise heat transfer to the motor from the cooking chamber. It is of course uneconomic to remove heat from the cooking chamber whatever its temperature and for this reason the impeller means is responsive to the temperature of the floor, the cooling air flow preferably being applied only when the sensed temperature exceeds a predetermined temperature of, preferably, approximately 350°C. The flow can thus be associated with a temperature sensing means controlling operation of the impeller through a thermostat.

Advantageously, the temperature-responsive means comprises a temperature sensor in contact with the underside of the upper plate.

Preferably, the temperature sensor is positioned adjacent the free end of a probe which is secured to a frame of the apparatus at its other end, the sensor coming into contact with the underside of the upper plate when the drip tray is fitted to the remainder of the apparatus. However, the temperature sensor may be secured to the underside of the upper plate and have a connection to the temperature-responsive control means which can be made and re-made to permit removal of the drip tray.

If near infra-red heating sources are used, the cooling air must be supplied to these regardless of the cooking chamber temperature so it is convenient to provide two separately operable cooling systems.

An embodiment of the invention is described below by way of example with reference to the accompanying drawing, in which:

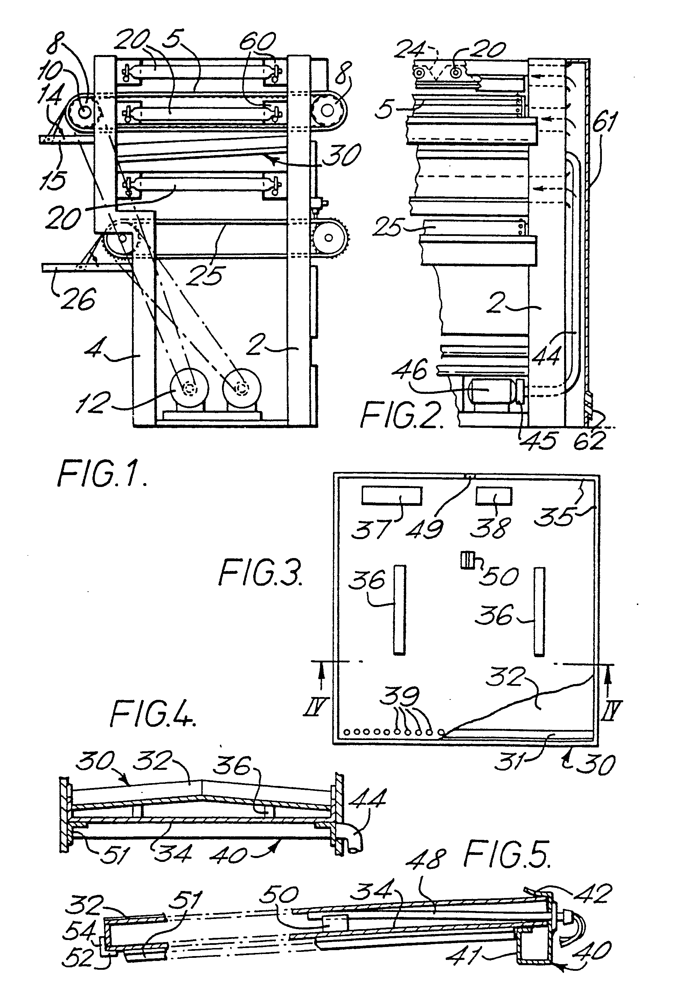

Figure 1 is a schematic side view of a cooking apparatus embodying the invention, with certain parts omitted;

Figure 2 is a partial schematic front view of the apparatus of Figure 1, again with parts omitted;

Figure 3 is a plan view of a drip tray included in the apparatus of Figures 1 and 2, partly broken away to show a lower plate thereof;

Figure 4 is a sectional front view taken on the line IV—IV of Figure 3, but showing the drip tray in place within the cooling apparatus; and

Figure 5 is a sectional fragmentary side view of a detail of the drip tray in place in the apparatus.

Referring now to the drawings, the illustrated cooking apparatus comprises a frame including tubular support pillars, for example, of stainless steel. The frame has two front pillars 2 and two rear pillars 4. At the upper part of the apparatus, side panels define a heating chamber through which runs a hamburger conveyor with a belt 5. The belt 5 is of ladder construction, that is, it comprises transversely extending bars joined to flexible links at their ends, the links forming a chain engaged by sprockets 8 at the front and the rear of the apparatus between which upper and lower runs of the belt extend horizontally through the frame. Between each pair of sprockets 8, a guide element presents a profiled surface over which the transverse bars of the belt 5 are guided. The rear sprockets 8 are on a common spindle 10 driven by an electric motor 12 located at the base of the frame through a chain drive. At the rear of the apparatus, a doctor blade 14 is lightly biassed against the belt 5 to guide cooked hamburgers which have been passed through the apparatus on the upper run of the belt onto a delivery shelf 15.

The cooking of hamburgers on the upper run of the conveyor belt 5 is effected by an upper bank of near infrared radiation sources above the upper run and by a lower bank of like sources located beneath the upper run, between it and the lower run. Each source comprises an elongate envelope or tube 20 of quartz containing a resistive element capable of emitting radiation preferably concentrated in the near infrared wavelength range for example between 1.5 μm to 0.72 μm. The two banks of the tubes 20 are mounted in respective racks, so that the tubes extend longitudinally of the path of travel of the hamburgers on the conveyor. Each bank of the tubes 20 is backed by a reflector 24, of aluminium or other highly reflective metal surface, so that the near infrared radiation from the tubes is directed onto the upper runs of the belts.

Below the belt 5 the frame mounts a lower conveyor with a belt 25, of a similar configuration to that of the belt 5, for heating bun halves. The belt 25 is associated with drive arrangements similar to those of the belt 5 but is of light construction, for example, a light gauge wire web, or of Teflon coated glass fibre material. Above the upper run of the belt 25 is mounted a third rack mounting a bank of the tubes 20 for heating bun halves on the upper run of the belt. No initial searing of the bun halves is required and such searing is avoided because the material for the belt is such as not to retain much heat. A second shelf 26 is provided at the rear of the apparatus for receiving hamburger buns after they have been heated on the belt 25.

Between the lower run of the belt 5 and the lower-most rack of tubes 20, the apparatus frame mounts a drip tray 30 for receiving fat exuded from the hamburgers during the cooking process, as readily occurs when the hamburgers are being cooked relatively quickly, for example, within a cooking time of two minutes. The drip tray 30 is generally rectangular and has an upper surface which slopes downwardly towards the rear of the machine for fat collection in a gulley 31 extending transversely across the machine at the lower rear end of the tray. To prevent ignition of fat collected on the tray because of the temperature to which the tray may be heated by the tubes 20, a cooling airflow beneath the exposed upper surface of the tray is provided.

For this purpose, the tray is constructed, for example of aluminium sheet material, from upper and lower plates 32, 34 spaced apart to provide a duct through which the cooling air is caused to flow.

The upper plate 32 of the tray slopes down to the sides of the apparatus from a centre line, to bring the fat collected thereon beneath the tubes 20 at the sides and thus to prevent solidification before it reaches the gulley.

The lower plate 34 of the drip tray has a raised rim 35 around its edges to which the upper plate is secured. Spacers 36 extend between the upper and lower plates to maintain the spacing and to confer rigidity on the tray structure. The lower plate 34 is apertured at 37 and 38 at the front of the apparatus to receive an incoming airflow and is also apertured along the rear edge, as by slots or as shown by a row of small holes 39 through which the airflow escapes after traversing the space between the plates.

Air under pressure enters the drip tray through the apertures 37, 38 from an elongate plenum chamber 40 extending horizontally across the front of the apparatus. To permit the drip tray to be removed for cleaning, its front edge is releasably engaged with the plenum chamber as best shown in Figure 5. The chamber is generally rectangular in the cross-section and has a transverse slot in the upper part of its rear wall 41, in which the drip tray is received. The upper part 42 of the wall 41 is turned outwardly at the upper edge of the slot to provide a guide for the drip tray during replacement and to resiliently engage upper plate 32 to make an adequate seal.

The apertures 37, 38 in the drip tray lower plate are thus received within the plenum chamber 40, into one end of which air is blown from an impeller 45 driven by an electric motor 46 at the base of the frame by way of a tube 44 extending upwardly from the impeller, or by way of the interior of one of the pillars 2. The location of the motor prevents the transfer of heat to the motor from the cooking chamber. The apertures 37 and 38 are positioned and dimensioned so that a generally uniform flow of air from front to back of the drip tray is obtained or so that a desired distribution of the air flow is obtained for example to take into account different cooking operations conducted at the two sides of the apparatus. In the apparatus illustrated, the aperture 38 nearer the inlet end of the plenum chamber is of smaller area than the other.

The electric motor 46 is preferably not operated continuously during use of the apparatus to avoid wasteful withdrawal of heat from the cooking chamber at temperatures below that at which flaming becomes a risk. Motor operation is therefore controlled in accordance with the temperature of the drip tray 30, in particular, that of the upper plate 32. Preferably, the motor 46 is energised only when a temperature approaching 370°C, for example 350°C is reached. Control is effected by a thermostat device including an elongate probe 48 which extends through the upper part of the front wall of the plenum chamber 40 and into the interior of the drip tray through an aperture 49 in the drip tray rim 35. The sensitive element of the probe is at its free end, and to ensure that this is engaged with the under surface of the drip tray top plate, a block 50 provided with an inclined V-shaped upper surface is secured to the drip tray lower plate. As will be clear from Figure 5, the drip tray can be installed within the apparatus after cleaning by movement towards the front of the apparatus, towards the end of which movement the end of the probe 48 will be received in the groove of the block 50, so that when the movement is concluded, the probe end is brought into firm contact with the top plate underside.

Alternatively, the probe 48 is permanently secured to the underside of the plate 32 or received in a suitable guide fitting extending through an aperture in the plate to its upperside. The probe is then electrically connected to a plug also secured to the tray and receivable in a socket carried by the frame.

The drip tray 30 is supported along its side edges by brackets 51 and at its rear edge by a bracket 52 which provides a lip 54 to restrain the drip tray against withdrawal movement, and over which it can be lifted when withdrawal is required.

Each of the racks mounting the tubes 20 includes a duct 60 at the front and another at the rear, into which the ends of the tubes 20 extend. As schematically shown in Figure 2, cooling air from a second cooling air system is passed through the ducts 60. At least the side panel 61 of the apparatus is of double-wall constructions, and an electrically driven impeller (not shown) is positioned within the side panel to draw in ambient air through louvers 62 at the foot of the apparatus and to impel it upwardly within the panel for distribution laterally through the ducts 60. The tube 44 is accommodated within this panel 61. After passage along the ducts 60, the air escapes at the other side of the apparatus, having collected heat from the ends of the tubes 20 in particular and cooling the apparatus as a whole. Because the tubes 20 must always be cooled when in operation, the second cooling system is continuously operated as long as a main control switch is closed to supply power to the tubes.

Instead of the double-wall construction for the side panel 61, this and the other side panels defining the heating chamber can be of single wall construction of aluminium panels for example, and the air supply to the ducts 60 is then carried through one or more of the support pillars 2, 4.

Additionally, provision can be made for application of cooling air to the outlet end region of the conveyor belt 5 at which the belt achieves its highest temperature. Thus, cooling air can be directed onto the portion of the belt 5 directly downstream of the sprockets 8 at the delivery end of the belt, that is, at the beginning of the lower run of the belt. Instead or as well air can be conveyed through the guide element for the transverse bars of the belt at this position, the element being constructed as a tube to receive an internal air flow for this purpose. This cooling air will enter the cooking chamber after flowing over the conveyor belt 5 but a small volume of air flow through the cooking chamber is advantageous and assists in reducing "flaming". The air supply for cooling the conveyor belt 5 and/or the associated guide element can be supplied from a third supply source controlled by a suitably positioned thermostat or operated throughout use of the apparatus. Instead cooling air can be directed to the belt and/or guide element from the ducts 60. It may however be preferred to supply the cooling air to the conveyor belt and/or the guide element from the first system, to avoid the introduction of cool air into the cooking chamber before this has reached the temperature at which the thermostat device effects operation of the motor 46.

**Claims**

1. An apparatus for heating food articles, the apparatus comprising a heating chamber for receiving a food article therein, means (5) for supporting a food article to be heated in the heating chamber and heating means (20) for heating such an article, characterised by impeller means (45) for causing cooling air to flow beneath at least a portion of the floor (32) of the chamber, which floor is positioned to receive fat exuded by the food article, and means responsive to the temperature of the floor for controlling the impeller means.

2. An apparatus as claimed in claim 1, including a removable drip tray (30) positioned beneath the supporting means, an upper surface of an upper plate (32) of the drip tray forming the heating chamber floor, the tray having a lower plate (34) spaced from the upper plate, and the impeller means causing the cooling air to flow between the upper and lower plates.

3. An apparatus as claimed in claim 2, wherein the temperature-responsive means comprises a temperature sensor in contact with the underside of the upper plate (32).

4. An apparatus as claimed in claim 3, wherein the temperature sensor is positioned adjacent the free end of a probe (48) which is secured to a frame (42) of the apparatus at its other end, the sensor coming into contact with the underside of the upper plate (32) when the drip tray (30) is fitted to the remainder of the apparatus.

5. An apparatus as claimed in claim 3, wherein the temperature sensor is secured to the underside of the upper plate (32) and has a connection to the temperature-responsive control means which can be made and re-made to permit removal of the drip tray.

6. An apparatus as claimed in any of Claims 2 to 5, wherein the lower plate (34) has an air inlet means (37, 38) and an air outlet means (39) arranged to provide a generally uniform air flow beneath the heating chamber floor.

7. An apparatus as claimed in any preceding claim, wherein the impeller means (45) is arranged to be energized only in response to a sensed temperature above a predetermined temperature, preferably approximately 350°C.

8. An apparatus as claimed in any preceding claim, wherein the upper surface of the heating chamber floor (32) is shaped or inclined to cause exuded fat to flow to a collection position.

9. An apparatus as claimed in claim 8, wherein the floor (32) is shaped or inclined to guide the flow of exuded fat so that the fat receives heat from the heating means (20).

10. An apparatus as claimed in claim 9, wherein the collection position is in a gulley (31) adjacent one edge of the floor (32) and the floor slopes downwardly to respective further edge regions to each side of a centre line which extends transversely to the gulley, the floor also sloping downwardly towards the gulley in the direction of the centre line and the heating means (20) having a portion lying above each said further edge region of the floor.

11. An apparatus as claimed in any preceding claim, including means for directing the cooling air flow also to other parts of the apparatus.

12. An apparatus according to claim 11, including conveyor means (5, 8, 10, 12) for conveying food articles in succession through the heating chamber, the cooling air being directed onto the conveyor means.

13. An apparatus as claimed in any preceding claim, wherein the heating means (20) comprises source means of radiation of wavelength between 1.5 µm and 0.72 µm.

14. A method of heating a food article tending to exude fat, the method including the steps of placing the food article within a heating chamber and heating the article and being characterised by the steps of receiving fat exuded by the article on the floor of the heating chamber, sensing the temperature of the floor and applying a cooling air flow to the floor externally thereof in response to the sensed temperature.

15. A method as claimed in claim 14, wherein the cooling air flow is applied only when the sensed temperature exceeds a predetermined temperature of, preferably, approximately 350°C.

16. A method as claimed in claims 14 or 15, when the article is heated by radiation of wavelength between 1.5 µm and 0.72 µm.

**Patentansprüche**

1. Vorrichtung zum Erhitzen von Speiseartikeln mit einer Heizkammer zur Aufnahme eines Speiseartikels, mit einer Abstützeinrichtung (5) für den in der Heizkammer zu erhitzenden Speiseartikel und mit einer Heizeinrichtung (20) zur Erhitzung eines solchen Arikels, gekennzeichnet durch eine Gebläseeinrichtung (45) zur Erzeugung eines Kühlluftstromes unterhalb zumindest eines Teiles des Bodens (32) der Kammer, wobei der Boden zur Aufnahme von aus dem Speiseartikel ausgeschiedenem Fett vorgesehen ist und durch eine auf die Temperature des Bodens ansprechende Einrichtung zur Steuerung der Gebläseeinrichtung.

2. Vorrichtung nach Anspruch 1, mit einer unterhalb der Abstützeinrichtung angeordneten Tropftasse (30), wobei eine obere Fläche einer oberen Platte (32) der Tropftasse den Boden der Heizkammer bildet, die Tasse eine in Abstand von der oberen Platte gelegene untere Platte (34) aufweist und die Gebläseeinrichtung den Kühlluftstrom zwischen der oberen und der unteren Platte erzeugt.

3. Vorrichtung nach Anspruch 2, bei welcher die auf Temperatur ansprechende Einrichtung einen mit der Unterseite der oberen Platte (32) in Berührung stehenden Temperaturfühler aufweist.

4. Vorrichtung nach Anspruch 3, bei welcher der Temperaturfühler im Bereich des freien Endes einer Sonde (48) angeordnet ist, die an ihrem anderen Ende an einem Rahmen (42) der Vorrichtung befestigt ist, wobei der Fühler mit der Unterseite der oberen Platte (32) in Kontakt kommt, wenn die Tropftasse (30) in den Restteil der Vorrichtung eingesetzt ist.

5. Vorrichtung nach Anspruch 3, bei welcher der Temperaturfühler an der Unterseite der oberen Platte (32) befestigt ist und mit der auf Temperatur ansprechenden Steuereinrichtung mittels einer lösbaren Verbindung verbunden ist, um das Entfernen der Tropftasse zu ermöglichen.

6. Vorrichtung nach einem der Ansprüche 2 bis 5, bei welcher an der unteren Platte (34) eine Lufteinlaßeinrichtung (37, 38) und eine Luftauslaßeinrichtung (39) angeordnet sind, um einen im wesentlichen gleichmäßigen Luftstrom unterhalb des Heizkammerbodens zu gewährleisten.

7. Vorrichtung nach irgendeinem der vorgehenden Ansprüche, bei welcher die Gebläseeinrichtung (45) nur mit Energie versorgt wird, wenn die erfaßte Temperatur oberhalb einer vorbestimmten Temperatur, vorzugsweise etwa 350°C, liegt.

8. Vorrichtung nach irgendeinem der vorgehenden Ansprüche, bei welcher die obere Oberfläche des Heizkammerbodens (32) so geformt oder geneigt ist, daß ausgetretenes Fett in Richtung eines Sammelortes fließt.

9. Vorrichtung nach Anspruch 8, bei welcher der Boden (32) so geformt oder geneigt ist, daß der Fluß ausgeschiedenen Fettes in einer Weise geführt wird, bei der das Fett von der Heizeinrichtung (20) Wärme erhält.

10. Vorrichtung nach Anspruch 9, bei welcher sich der Sammelort in einer benachbart zu einem Rand des Bodens (32) gelegenen Sammelrinne (31) befindet, wobei der Boden nach unten zu entsprechenden weiteren Randbereichen an jeder Seite einer quer zu der Sammelrinne verlaufenden Mittellinie verläuft und der Boden ebenso nach unten zu der Sammelrinne in Richtung der Mittellinie verläuft und die Heizeinrichtung (20) einen Teil besitzt, der oberhalb jedes weiteren Randbereiches des Bodens liegt.

11. Vorrichtung nach irgendeinem der vorgehenden Ansprüche mit Einrichtungen, welche den Kühlluftstrom auch zu anderen Teilen der Vorrichtung lenken.

12. Vorrichtung nach Anspruch 11 mit Fördereinrichtungen zum aufeinanderfolgenden Fördern der Speiseartikel durch die Heizkammer, wobei die Kühlluft auf die Fördereinrichtungen gerichtet ist.

13. Vorrichtung nach irgendeinem der vorgehenden Ansprüche, bei welcher die Heizeinrichtung (20) eine Strahlungsquelle mit einer Wellenlänge der Strahlung zwischen 1,5 µm und 0,72 µm enthält.

14. Verfahren zum Erhitzen eines Speiseartikels, der zur Ausscheidung von Fett neigt, welches die Schritte des Einbringens des Speiseartikels in eine Heizkammer und des Erhitzens des Artikels aufweist, gekennzeichnet durch die Schritte: Auffangen des von dem Artikel ausgeschiedenen Fettes auf einem Boden der Heizkammer, Erfassen der Temperatur des Bodens und Zuführen eines Kühlluftstromes zu dem Boden außerhalb desselben in Abhängigkeit von der erfaßten Temperatur.

15. Verfahren nach Anspruch 14, bei welcher der Kühlluftstrom nur zugeführt wird, wenn die erfaßte Temperatur eine vorbestimmte Temperatur von vorzugsweise etwa 350°C überschreitet.

16. Verfahren nach einem der Ansprüche 14 oder 15, bei welchem der Artikel durch Strahlung mit einer Wellenlänge zwischen 1,5 µm und 0,72 µm erhitzt wird.

**Revendications**

1. Appareil pour chauffer des articles alimentaires, cet appareil comprenant une chambre de chauffage pour recevoir intérieurement un article alimentaire, des moyens (5) pour soutenir an article d'alimentation devant être chauffé dans la chambre de chauffage, et un dispositif chauffant (20) pour chauffer cet article, caractérisé par une turbine (45) pour astreindre de l'air de refroidissement à s'écouler au-dessous d'au moins une partie de plancher (32) de la chambre, ce plancher étant positionné de façon à recevoir de la graisse exsudée par l'article alimentaire, et des moyens sensibles à la température du plancher pour commander la turbine.

2. Appareil selon la revendication 1, comprenant un réceptacle (30) d'égouttage, amovible, disposé au-dessous des moyens de supports, une surface supérieure d'une plaque supérieure (32) du réceptacle d'égouttage formant le plancher de la chambre de chauffage, le réceptacle ayant une plaque inférieure (34) espacées de la plaque supérieure et la turbine astreignant l'air de refroidissement à s'écouler entre les plaques inférieure et supérieure.

3. Appareil suivant la revendication 2, dans lequel le dispositif sensible à la température comprend un capteur de température en contact avec la face inférieure de la plaque supérieure (32).

4. Appareil suivant la revendication 3, dans lequel le capteur de température est disposé adjacent à l'extrémité libre d'une sonde (48) qui est fixée sur un bâti (42) de l'appareil par son autre extrémité, le capteur venant en contact avec la face inférieure de la plaque supérieure (32) lorsque le réceptacle d'égouttage (30) est ajusté sur le reste de l'appareil.

5. Appareil suivant la revendication 3, dans lequel le capteur de température est fixé sur la face inférieure de la plaque supérieure (32) et comporte une liaison avec le dispositif de commande sensible à la température, qui peut être établie et rétablie pour permettre l'enlèvement du réceptacle d'égouttage.

6. Appareil suivant l'une quelconque des revendications 2 à 5, dans lequel la plaque inférieure (34) comporte des moyens (37, 38) d'entrée d'air et des moyens (39) de sortie d'air, agencés pour assurer un écoulement d'air qui est dnas son ensemble uniforme au-dessous du plancher de la chambre de chauffage.

7. Appareil suivant l'une quelconque des revendications précédentes, dans lequel la turbine (45) est agencée pour être excitée seulement en réponse à une température captée supérieure à une température prédéterminée, qui est de préférence d'environ 350°C.

8. Appareil suivant l'une quelconque des revendications précédentes, dans lequel la surface supérieure du plancher (32) de la chambre de chauffage est conformée ou inclinée de façon à astreindre la graisse exsudée à s'écouler vers un point où elle est recueillie.

9. Appareil suivant la revendication 8, dans lequel le plancher (32) est conformé ou incliné de façon à guider l'écoulement de la graisse exsudée de manière que cette graisse reçoive de la chaleur provenant du dispositif de chauffage (20).

10. Appareil suivant la revendication 9, dans lequel le point où la graisse est recueillie est une rigole (31) adjacente à un bord du plancher (32), et le plancher est incliné vers le bas vers d'autres régions respectives du bord vers chaque côté d'un axe intermédiaire qui s'étend transversalement à la rigole, le plancher étant également incliné vers le bas en direction de la rigole dans la direction de l'axe intermédiaire et le dispositif de chauffage (20) ayant une partie se trouvant au-dessus de chacune desdites autres régions du bord du plancher.

11. Appareil suivant l'une quelconque des revendications précédentes, comprenant des moyens pour diriger l'écoulement d'air de refroidissement également vers d'autres parties de l'appareil.

12. Appareil suivant la revendication 11, comprenant des transporteurs (5, 8, 10, 12) pour acheminer des articles alimentaires successivement à travers la chambre de chauffage, l'air de refroidissement étant dirigé sur les transporteurs.

13. Appareil suivant l'une quelconque des revendications précédentes, dans lequel le dispositif de chauffage (20) comprend une source de rayonnement ayant une longueur d'ondes entre 1,5 µm et 0,72 µm.

14. Procédé pour chauffer des articles alimentaires tendant à exsuder de al graisse, ce procédé comprenant les phases consistant à placer l'article alimentaire dans une chambre de chauffage et à chauffet l'article, ce procédé étant caractérisé par les phases consistant à recevoir de la graisse exsudée par l'article sur un plancher de la chambre de chauffage, à capter la température du plancher et à appliquer un écoulement d'air de refroidissement au plancher à l'extérieur de celui-ci en réponse à la température captée.

15. Procédé suivant la revendication 14, dans lequel l'écoulement d'air de refroidissement est appliqué seulement lorsque la température captée excède une température prédéterminée qui est de préférence d'environ 350°C.

16. Procédé suivant la revendication 14 ou 15, dans lequel l'article est chauffé par rayonnement d'une longueure d'onde comprise entre 1,5 µm et 0,72 µm.

FIG.1.

FIG.2.

FIG.3.

FIG.4.

FIG.5.